(19) Europäisches Patentamt
European Patent Office
Office européen des brevets

(11) Numéro de publication: **0 358 580**
**A1**

(12) # DEMANDE DE BREVET EUROPEEN

(21) Numéro de dépôt: **89420318.1**

(22) Date de dépôt: **29.08.89**

(51) Int. Cl.$^5$: **C 08 G 77/38**
C 08 G 77/14

(30) Priorité: **05.09.88 FR 8811768**

(43) Date de publication de la demande:
**14.03.90 Bulletin 90/11**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Frances, Jean-Marc**
**9, avenue Condorcet**
**F-69100 Villeurbanne (FR)**

**Metz, François**
**22, rue de Condé**
**F-69002 Lyon (FR)**

(74) Mandataire: **Seugnet, Jean Louis et al**
**RHONE-POULENC INTERSERVICES Service Brevets**
**Chimie Centre de Recherches des Carrières B.P. 62**
**F-69192 Saint-Fons Cédex (FR)**

(54) **Polyorganosiloxane à fonction propanaldéhyde et son procédé de préparation par hydroformylation.**

(57) L'invention concerne un polyorganosiloxane linéaire ou ramifié à fonction propanaldéhyde présentant par molécule au moins trois motifs siloxanyle dont au moins un motif répond à la formule générale :

$$XR_aSiO_{\frac{3-a}{2}}$$

dans laquelle X est choisi parmi le radical $-CH_2-CH_2-CHO$ et le radical

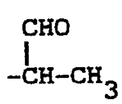

et R est un reste hydrocarboné monovoalent ayant de 1 à 12 atomes de carbone.

Le polyorganosiloxane selon l'invention peut être préparé par hydroformylation du polyorganosiloxane correspondant en phase organique au moyen d'un système catalitique : soluble dans la phase organique mais insoluble en phase aqueuse, renfermant le complexe Rhodium/sels de triarylphosphines sulfonés ou carboxylés.

Le polyorganosiloxane selon l'invention est réticulable en un élastomère en présence de l'oxygène de l'air.

EP 0 358 580 A1

## Description

# POLYORGANOSILOXANE A FONCTION PROPANALDEHYDE ET SON PROCEDE DE PREPARATION PAR HYDROFORMYLATION

La présente invention concerne un polyorganosiloxane à fonction propanaldéhyde et son procédé de préparation par hydroformylation.

L'obtention de silane à fonction propanaldéhyde, c'est-à-dire du type $\equiv Si-CH_2-CH_2-CHO$, ou $\equiv Si-\underset{|}{\overset{CHO}{CH}}-CH_3$ par réaction d'hydroformylation sur le vinylsilane correspondant avec divers catalyseurs a déjà été décrite dans la littérature scientifique. Ainsi :

- dans "J. Org. Chem." Vol. 17, p. 1107-1109, le catalyseur d'hydroformylation est à base de cobalt,
- dans "Journal of General Chemistry" d'URSS (traduction du "Zhurnal Obshchei Khimi", p. 1395-1397 du 20 décembre 1977), Vol. 47, numéro 7, partie1, Juillet 1977, le catalyseur est à base de rhodium,
- dans EP-A-89 690, le catalyseur est de préférence du rhodium déposé sur alumine.

A la connaissance de la Demanderesse, la littérature de chimie ne décrit pas l'obtention de polyorganopolysiloxane à fonction propanaldéhyde par un procédé d'hydroformylation ou par tout autre procédé d'obtention. Seul le disiloxane de formule :
$(OHCCH_2CH_2)(CH_3)_2Si-O-Si(CH_3)_2(CH_2CH_2CHO)$
est décrit dans "J. Org. Chem.", Vol. 35, numéro 12, p. 4180-4183 (1970) par un procédé faisant intervenir l'hydrolyse d'un précurseur disiloxane.

En outre, à la connaissance de la Demanderesse il n'a jamais été décrit un procédé d'hydroformylation de vinylsilane en présence d'un système catalytique contenant du rhodium et des sels de triarylphosphines sulfonés ou carboxylés.

Un tel procédé d'hydroformylation appliqué aux oléfines organiques est décrit dans FR-A-2 314 910 dans le cas où les sels de phosphines sont solubles dans l'eau, et dans US-A-4 740 626 dans le cas où les sels de phosphines sont solubles dans les solvants organiques, insolubles dans l'eau mais solubles dans une solution aqueuse d'une base.

Dans le cas de FR-A-2 314 910, la réaction d'hydroformylation s'effectue en phase aqueuse. Dans le cas de US-A-4 740 626 elle s'effectue en phase organique.

Un but de la présente invention est de proposer des polyorganosiloxanes à fonction propanaldéhyde, présentant au moins trois motifs siloxyle par molécule.

Un autre but de la présente invention est de proposer des polyorganosiloxanes, en particulier des diorganopolysiloxanes linéaires ou cycliques, à fonction propanaldéhyde stables au stockage à l'abri de l'oxygène de l'air, mais réticulable à l'oxygène de l'air en un élastomère.

Un autre but de la présente invention est de proposer un procédé de préparation, par hydroformylation, de polyorganosiloxane à fonction propanaldéhyde à partir des polyorganovinylsiloxanes correspondants, un tel procédé devant aboutir aux produits désirés avec un bon taux de transformation des groupes vinyle en groupes propanaldéhyde, avec une séparation aisée du système catalytique.

Ces buts et d'autres sont atteints par la présente invention qui concerne en effet un polyorganosiloxane présentant par molécule au moins trois motifs siloxyle dont au moins un motif répond à la formule générale :

$$XR_aSiO_{\frac{3-a}{2}} \qquad (1)$$

dans laquelle :

- X est choisi parmi les radicaux $-CH_2-CH_2-CHO$ et

$$-\underset{}{\overset{CHO}{\overset{|}{CH}}}-CH_3,$$

- les radicaux R, identiques ou différents, sont choisis parmi le radical phényle, trifluoro-3,3,3 propyle et un radical alkyle ayant de 1à 12 atomes de carbone,
- a est choisi parmi 0,1 et 2.

Comme exemples de radicaux R on peut citer les radicaux méthyle, éthyle, propyle, héxyle et dodécyle. De préférence, au moins 50 % en nombre des radicaux R sont des radicaux méthyle.

Les autres motifs siloxyle répondent de préférence à la formule :

$$R'_xSiO_{\frac{4-x}{2}} \qquad (1'')$$

dans laquelle :
- les radicaux R′, identiques ou différents, sont choisis parmi les radicaux R, vinyle, hydroxyle et alcoxy ayant de 1 à 3 atomes de carbone et,
- x est choisi parmi 0,1, 2 et 3.

De préférence R′ est choisi parmi les radicaux méthyle, phényle et vinyle, au moins 50 % en nombres des radicaux R′ étant méthyle.

Les polyorganosiloxanes selon l'invention peuvent présenter une structure linéaire, cyclique ou ramifiée.

La présente invention vise plus spécifiquement les copolymères diorganopolysiloxanes statistiques, séquencés ou à blocs, à fonction propanaldéhyde de formule :

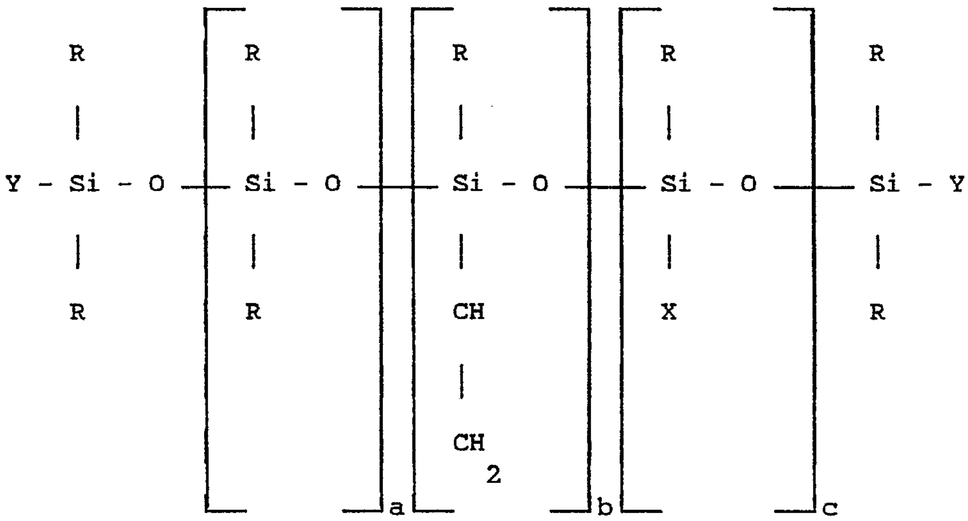

(2)

dans laquelle :
- X et R, identiques ou différents, ont la signification donnée ci-dessus,
- Y, identiques ou différents, sont choisis parmi les radicaux R et X,
- a est un nombre entier compris entre 0 et 1 000 inclusivement,
- b est un nombre entier compris entre 0 et 50 inclusivement,
- c est un nombre entier compris entre 0 et 100 inclusivement et, si c est 0, au moins un des deux radicaux Y est X et,
- a + b + c est au moins égal à 1

et ceux de formule :

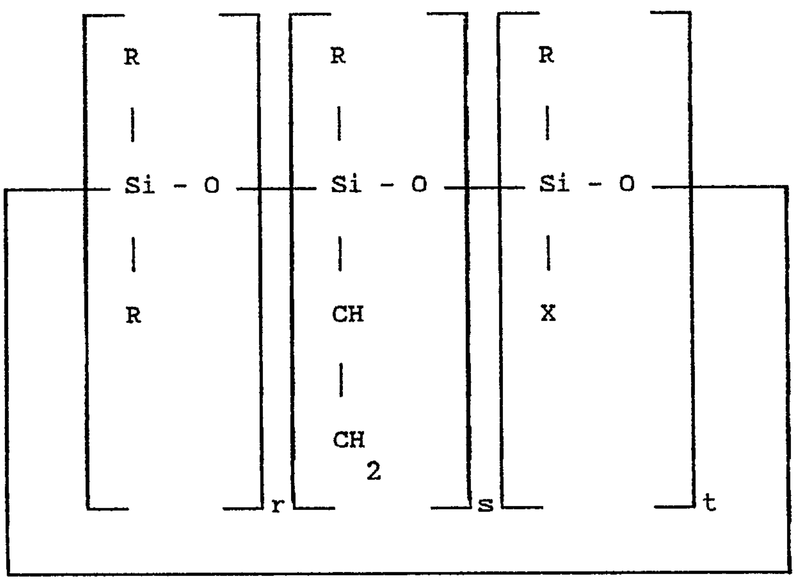

(3)

dans laquelle :
- R, X ont la signification ci-dessus,
- r est un nombre entier compris entre 0 et 9 inclus,
- s est un nombre entier compris entre 0 et 9 inclus,

- t est un nombre entier compris entre 1 et 10 inlcus.

Il est souhaitable pour les polymères de formules (1), (2) et (3) que plus de 80 % en nombre des radicaux X soient des radicaux de formule $-CH_2-CH_2-CHO$.

En effet le groupe $\equiv Si-CH(CHO)-CH_3$ peut éventuellement s'isomériser en groupement énoxy $\equiv Si-O-CH=CH-CH_3$.

De préférence les polymères de formule (2) sont ceux pour lesquels :

- a est un nombre entier compris entre 1 et 400 inclus,
- b est un nombre entier compris entre 0 et 20 inclus,
- c est un nombre entier compris entre 2 et 60 inclus,
- R est choisi parmi les radicaux méthyle et phényle, au moins 50 % en nombre de radicaux R étant méthyle.

De préférence les polymères de formule (3) sont ceux pour lesquels :

- r est un nombre entier compris entre 0 et 5 inclus,
- s est un nombre entier compris entre 0 et 5 inclus,
- t est un nombre entier compris entre 1 et 6 inclus,
- r + s + t est compris entre 3 et 6 inclus,
- R est choisi parmi les radicaux méthyle et phényle, 50 % au moins en nombre de radicaux R étant méthyle.

Les polyorganosiloxanes selon l'invention peuvent être préparés par hydroformylation en milieu monophasique, le polyorganovinylsiloxane de départ étant de préférence en solution dans un solvant organique. Ce procédé mettant en oeuvre les catalyseurs usuels d'hydroformylation conduit généralement aux huiles désirées. Toutefois, quand le catalyseur utilisé n'est pas supporté il se pose le problème de la récupération du rhodium. Le procédé décrit dans FR-A-2 314 910 précité ne conduit pas au polymère souhaité.

Selon la présente invention on a pu mettre en évidence que le procédé d'hydroformylation, objet de US-A-4 740 626 précité convenait particulièrement pour la préparation des polyorganosiloxanes à fonction propanaldéhyde.

La présente invention vise donc un procédé de préparation de polyorganosiloxane présentant au moins trois groupes siloxyle dont au moins un groupe siloxyle répond à la formule (1) ci-dessus, caractérisé en ce qu'on effectue la réaction au moins partielle d'un polyorganosiloxane présentant par molécule au moins trois motifs siloxyle dont au moins un motif siloxyle répond à la formule générale :

$$(CH_2=CH)R_aSiO_{\frac{3-a}{2}} \qquad (1')$$

dans laquelle R et a ont la signification donnée ci-dessus, dans un solvant organique, avec de l'hydrogène et du monoxyde de carbone en présence d'un système catalytique contenant du rhodium et des sels de triarylphosphines sulfonées ou carboxylées solubles dans les solvants organiques et insolubles dans l'eau ; le mélange homogène obtenu est ensuite mis en contact avec une solution aqueuse d'une base en vue de séparer une phase organique renfermant l'organopolysiloxane à groupe propanaldéhyde et une phase aqueuse renfermant le catalyseur à base de rhodium.

Les diorganopolysiloxanes de formules (2) et (3) sont respectivement préparés par ce même procédé, le polyorganivinylsiloxane de départ étant choisi parmi ceux de formule :

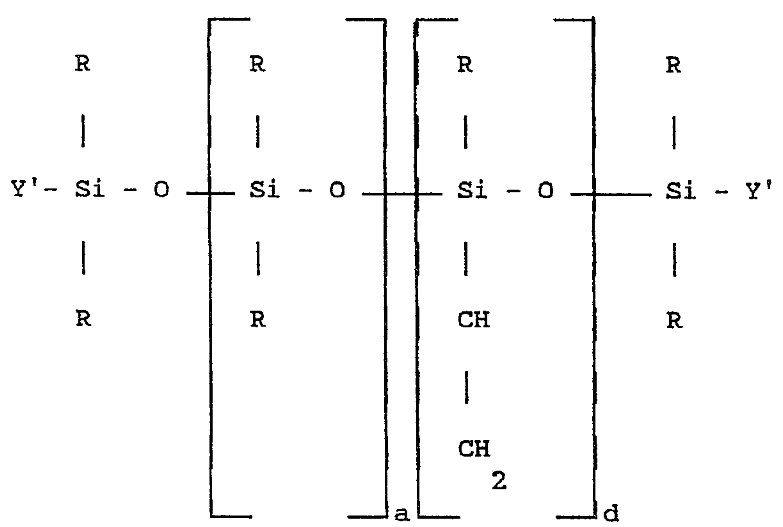

(2')

dans laquelle :

- R et a ont la signification ci-dessus,

- d est égal à b + c, et
- Y′ est choisi parmi un radical vinyle et le radical R et quand d = 0, au moins un des deux Y′est un radical vinyle,

et de formule :

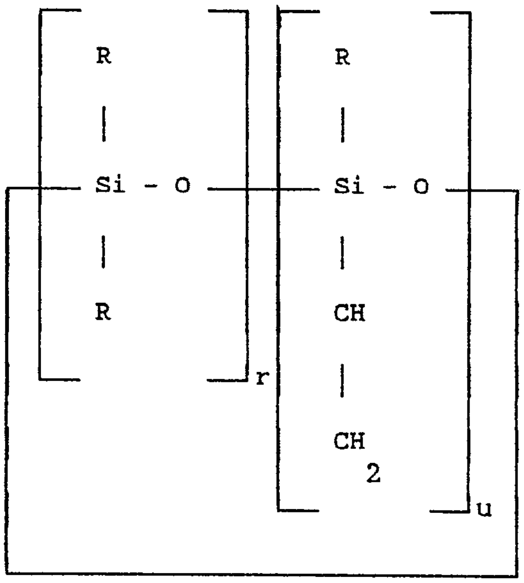

(3')

dans laquelle R a la signification donnée ci-dessus et u est égal à s + t, r + u étant compris entre 3 et 10 inclus.

Les sels de phosphine comportent de préférence comme cations $\{NR''_2H_2\}^+$ et/ou $\{NR''_3H\}^+$, R″ étant un radical alkyle ayant de 4 à 12 atomes de carbone, un radical aryle, ou un radical cycloalkyle ayant de 6 à 12 atomes de carbone.

La réaction d'hydroformylation peut être mise en oeuvre à une température comprise entre 80 et 180 °C, à une pression comprise entre 10 et 35 bars.

La quantité de rhodium engagée est généralement comprise entre 5 et 100 ppm basée sur l'organopolysiloxane de départ.

Le procédé et le système catalytique sont décrits en détail dans le brevet US-A-4 740 626 cité comme référence.

La phosphine préférée est la triphénylphosphine trisulfonée de formule :

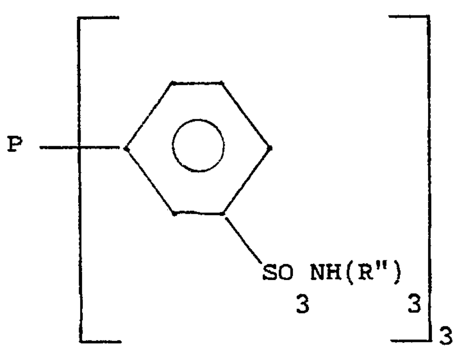

Le complexe de rhodium préféré associé à un excès molaire de cette phosphine est le complexe rhodié dinucléaire de formule :

$\{Rh(\mu\text{-}SZ)(CO)_2\}_2$

Les radicaux Z, identiques ou différents, étant un radical hydrocarboné monovalent, en particulier un radical alkyle de 1 à 6 atomes de carbone, en particulier le radical tertiobutyle, dont le procédé de préparation est décrit dans EP-A-179 004 cité comme référence.

Le polyorganovinylsiloxane de départ est de préférence en solution dans un solvant organique tel que le toluène.

Les polymères selon l'invention sont stables au stockage en absence d'oxygène et réticulent en un élastomère par simple exposition à l'oxygène de l'air sans utiliser ou en utilisant un catalyseur de durcissement métallique. Ils sont donc utilisables pour revêtir divers supports par une couche élastomère dont l'épaisseur peut varier de 0,1 à 5 mm. Ils sont ainsi utilisables pour l'encapsulation de circuits

électroniques.

Les polymères selon la présente invention peuvent être utilisés également pour la préparation de compositions stables au stockage, comprenant notamment des charges et des catalyseurs, lesdites compositions se transformant en élastomères par réticulation sous l'action de l'oxygène de l'air.

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 $m^2/g$.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français 1 126 884, 1 136 885, 1 236 505 ; brevet anglais 1 024 234). Les charges traitées renferment, dans la plupart des cas, de 3 à 30 % de leur poids de composés organosiliciques.

Les charges peuvent être constituées d'un mélange de plusieurs types de charges de granulométrie différente ; ainsi par exemple, elles peuvent être constituées de 30 à 70 % de silices finement divisées de surface spécifique BET supérieure à 40 $m^2/g$ et de 70 à 30 % de silices plus grossièrement divisées de surface spécifique inférieure à 30 $m^2/g$.

Ces charges sont généralement utilisées à raison de 0 à 250 parties, de préférence de 5 à 150 parties, pour 100 parties (en poids) de polyorganosiloxane à fonction propanaldéhyde.

En tant que catalyseurs on peut utiliser des sels d'acides carboxyliques et de métaux tels que par exemple le baryum, le bismuth, le calcium, le cérium, le chrome, le cuivre, le fer, le plomb, le magnésium, le manganèse, le molybdène, le nickel, le cobalt, les terres rares, l'étain, le zinc, le zirconium. Des ligands oroganiques avec ces métaux peuvent également être utilisés, comme par exemple les acétylacétonates de ces métaux. Les catalyseurs préférés sont les carboxylates de cobalt, de fer et de manganèse. La quantité de catalyseur utilisée est généralement inférieure à 1 partie (en poids) pour 100 parties du polysiloxane à fonction propanaldéhyde.

Les exemples suivants illustrent l'invention.

- EXEMPLE 1 : Préparation du système catalytique :

1.a. - Préparation du ligand de formule :

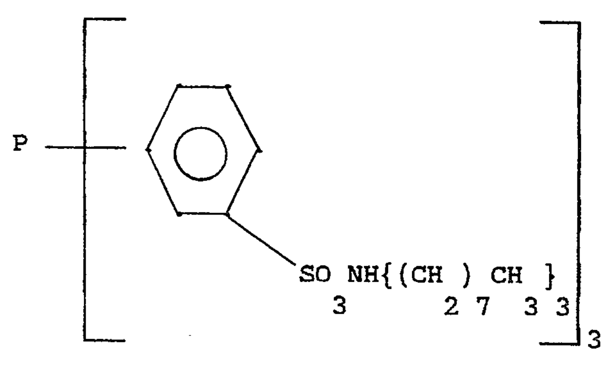

On mélange sous agitation et sous atmosphère d'azote 5,9 g de triphénylphosphine trisulfonée en position méta titrant 9,26 meq (milliéquivalent) de P (III), avec 19 g d'eau et 1,2 g d'$H_2SO_4$ titrant 25 meq $H^+$.

On maintient sous agitation magnétique 30 minutes, puis on ajoute 31,3 g de toluène et 13,5 g de tris-n-octyl amine.

On maintient le mélange sous agitation vigoureuse durant 60 minutes à température ambiante (20 °C) et sous azote et on laisse décanter la phase organique supérieure (35 g) et la phase aqueuse (23,72 g).

La phase organique est conservée ; elle titre 4,6 meq P (III) et elle comporte 13,4 meq de tris-octylamine fixée ou non fixée au phosphore et 27 g de toluène.

Le titre en phosphore est déterminé par iodométrie.

1.b. - Préparation des systèmes catalytiques :

Ils sont préparés par simple mélange de quantités variables Q en mg de complexe "papillon" du rhodium dinucléaire de formule :

$\{Rh\ (\mu\text{-}StBu)(CO)_2\}_2$

qui est le di(μ-sulphotertiobutyle)tétracarbonyledirhodium dont le procédé de préparation est décrit dans J. Organomet. Chem., 73, C36, 1974 sur des quantités variables Q′ en g de solution dans le toluène du ligand obtenu dans l'exemple 1.a. ci-dessus.

On prépare ainsi 3 systèmes catalytiques $S_1$, $S_2$ et $S_4$ dont les caractéristiques Q, Q′titre en rhodium en milliatome-gramme (m.atg), titre en P (III) en meq et rapport molaire P/Rh sont indiqués dans le tableau 1 ci-après.

On prépare de façon analogue 3 systèmes catalytiques $S_3$, $S_5$ et $S_6$ en modifiant cependant les quantités de chacun des constituants.

Les caractéristiques de ces systèmes sont indiquées dans le tableau 1 ci-après.

TABLEAU 1

| S : Système catalytique | Q (mg) | Rh m.atg | Q′ (g) | P (III) meg | P/Rh |
|---|---|---|---|---|---|
| $S_1$ | 23,30 | $9{,}40\ 10^{-2}$ | 3,85 | 0,5 | 5,3 |
| $S_2$ | 4,00 | $1{,}60\ 10^{-2}$ | 4,6 | 0,6 | 37 |
| $S_3$ | 4,10 | $1{,}66\ 10^{-2}$ | 3,5 | 2,3 | 140 |
| $S_4$ | 3,00 | $1{,}21\ 10^{-2}$ | 3,85 | 0,5 | 41 |
| $S_5$ | 48,00 | $1{,}93\ 10^{-2}$ | 15 | 1,57 | 8 |
| $S_6$ | 3,72 | $1{,}50\ 10^{-2}$ | 22,45 | 1,5 | 100 |

- EXEMPLES 2 A 7 : Hydroformylation d'organovinyl polysiloxane -

Mode opératoire : dans un autoclave en acier inoxydable de 500 $cm^3$, muni d'un système de chauffage, on introduit un système catalytique S, une huile H polyorganovinyl siloxane définie par son poids $p_1$, son titre en groupe vinyle $T_{vi}$ en milliéquivalent et une certaine quantité $p_2$ (en g) de toluène.

L'autoclave est rempli d'azote et on introduit à température θ comprise entre 100 et 110 °C un mélange $H_2/CO$ (rapport molaire 1/1) à une pression constante de 21 bars.

Un système de capteurs de pression permet de suivre la consommation de gaz $H_2/CO$ dans une réserve de 500 $cm^3$ mise en pression à 100 bars avant la réaction.

On arrête éventuellement la réaction après une introduction calculée de gaz $H_2/CO$ correspondant au taux désiré de transformation TT (en %) des groupes vinyles introduits, en isolant l'autoclave du système d'introduction et en refroidissant brusquement l'autoclave. On mesure le temps de réaction t (en mn).

L'autoclave isolé est purgé au moyen d'un système d'évacuation des gaz. Le mélange réactionnel obtenu est traité par 100 g d'eau sodée à 0,3 % de NaOH dans un ballon d'un litre pendant 60 minutes à 20 °C sous agitation magnétique.

L'émulsion obtenue est séparée par centrifugation durant 20 minutes à 7 000 tours/mn.

La phase organique supérieure est limpide et incolore. La phase aqueuse contenant le rhodium s'est teintée de jaune.

On évapore le toluène de la phase organique pour isoler l'huile silicone sur laquelle on dose les fonctions vinyle ainsi que les fonctions propanaldéhyde par réaction avec $H_2N\text{-}OH/HCl$ en présence de triéthanolamine.

A partir des spectres RMN $^1H$ et $^{29}Si$ et infra-rouge, on détermine : le taux de transformation des motifs vinyle (TT en %), le taux de transformation des motifs vinyle en bout de chaîne ($TT_1$ en %), le taux de transformation des motifs vinyle dans la chaîne ($TT_2$ en %), le rendement en groupes propanaldéhyde linéaire obtenu en bout de chaîne ($RRl_1$ en %), le rendement en propanaldéhyde linéaire obtenu dans la chaîne ($RRl_2$ en %), le rendement en propanaldéhyde ramifié dans la chaîne ($RRb_2$) et en bout de chaîne ($RRb_1$) isomérisé en enoxysilane.

On détermine le nombre de rotations A qui est égal au nombre de moles de réactifs transformés par atome gramme de rhodium et par minute de réaction, ainsi que le rapport molaire Vi/Rh.

Les huiles H utilisées présentent les formules moyennes suivantes (Vi = vinyle, Me = méthyle) :

$H_1$ : (exemples 2 et 3) :

$Vi\,Me_2SiO(Me_2SiO)_{153}(MeViSiO)_{10}SiMe_2Vi$

$H_2$ : (exemple 4) :

$Me_3SiO(Me_2SiO)_{238}(MeViSiO)_{46}SiMe_3$

$H_3$ : (exemples 5 à 7) :

$Me_2ViSiO(Me_2SiO)_{22,3}SiMe_2Vi$

Les conditions opératoires et les résultats obtenus sont rassemblés respectivement dans les tableaux 2 et 3 ci-après.

De plus après traitement à l'eau sodée du mélange réactionnel, on dose la quantité de rhodium résiduelle par dosage d'absorption atomique.

Dans les exemples 2 à 7 on trouve moins de 1 % en poids de rhodium résiduel par rapport au poids de rhodium introduit au départ.

TABLEAU 2

| Exemples | S | H | p1 (g) | Tvi | p2 | Vi/Rh | θ (°C) |
|---|---|---|---|---|---|---|---|
| 2 | S1 | H1 | 159,3 | 147,5 | 117,0 | 1 568 | 110 |
| 3 | S2 | H1 | 160,0 | 148,0 | 110,0 | 9 174 | 105 |
| 4 | S3 | H2 | 71,9 | 106,5 | 182,3 | 6 415 | 110 |
| 5 | S4 | H3 | 122,2 | 126,7 | 67,0 | 10 471 | 100 |
| 6 | S5 | H3 | 100,2 | 105,0 | 170,0 | 542 | 100 |
| 7 | S6 | H3 | 116,2 | 134,7 | 135,0 | 8 980 | 100 |

TABLEAU 3

| Ex. | TT | t (mn) | A | TT1 (%) | RRl1 (%) | RRb1 (%) | RRl2 (%) | RRb2 (%) | TT2 (%) |
|---|---|---|---|---|---|---|---|---|---|
| 2 | 56 | 9 | 110 | 85 | 70 | - | 53 | 11 | 68 |
| 3 | 52 | 39 | 120 | 83 | 75 | - | 47 | 8 | 58 |
| 4 | 50 | 90 | 35 | - | - | - | 35 | 6 | 45 |
| 5 | 100 | 60 | - | 100 | 82 | 14 | - | - | - |
| 6 | 94 | 7 | 90 | 94 | 68 | 15 | - | - | - |
| 7 | 95 | 50 | 160 | 96 | 74 | 20 | - | - | - |

- EXEMPLE 8 :

On applique sur un support les huiles obtenues aux exemples 2, 3 et 4 suivant une pellicule (film) de 0,1 à 5 mm d'épaisseur.

Les pellicules forment un revêtement lisse, transparent et réticulé en présence d'oxygène et sans catalyseur.

Une pellicule de 2 mm d'épaisseur déposée sur une plaque d'aluminium ou d'acier inoxydable est démoulable en 72 heures.

L'analyse du spectre RMN $^{29}Si$ du gel obtenu par immersion de la pellicule dans un solvant organique indique que les motifs $RXSiO_{2/2}$ ne sont pas transformés en motifs $RSiO_{3/2}$.

**Revendications**

1. - Polyorganosiloxane présentant par molécule au moins trois motifs siloxyle dont au moins un motif répond à la formule générale :

$$XR_aSiO_{\frac{3-a}{2}} \quad (1)$$

dans laquelle :

- X est choisi parmi les radicaux $-CH_2-CH_2-CHO$ et

$$-\underset{}{\overset{\displaystyle CHO}{\overset{|}{C}H}}-CH_3,$$

- les radicaux R, identiques ou différents, sont choisis parmi le radical phényle, trifluoro-3,3,3 propyle et un radical alkyle ayant de 1 à 12 atomes de carbone,

- a est choisi parmi 0,1 et 2.

2. - Polyorganosiloxane selon la revendication 1, caractérisé en ce qu'il est choisi parmi les diorganopolysiloxanes de formule :

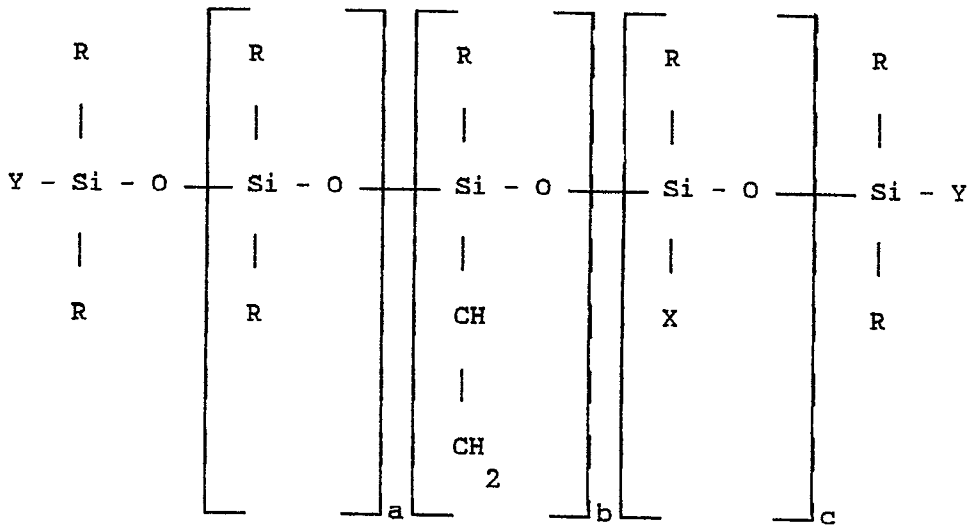
(2)

dans laquelle :
- X et R, identiques ou différents, ont la signification donnée à la revendication 1,
- Y, identiques ou différents, sont choisis parmi les radicaux R et X,
- a est un nombre entier compris entre 0 et 1 000 inclusivement,
- b est un nombre entier compris entre 0 et 50 inclusivement,
- c est un nombre entier compris entre 0 et 100 inclusivement et, si c est 0, au moins un des deux radicaux Y est X,
- a + b + c est au moins égal à 1

et ceux de formule :

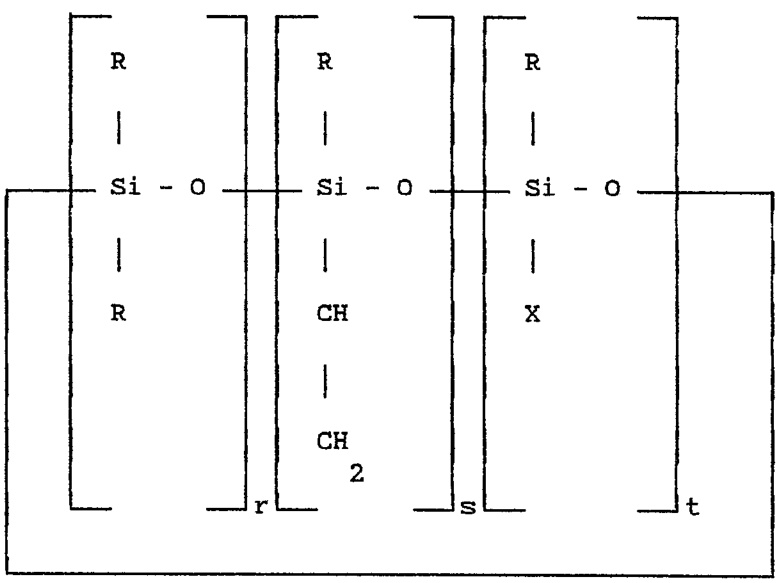
(3)

dans laquelle :
- R, X ont la signification ci-dessus,
- r est un nombre entier compris entre 0 et 9 inclus,
- s est un nombre entier compris entre 0 et 9 inclus,
- t est un nombre entier compris entre 1 et 10 inlcus.

3. - Polyorganopolysiloxane selon la revendication 1 ou 2, caractérisé en ce que les radicaux R, identiques ou différents, sont choisis parmi les radicaux méthyle et phényle, au moins 50 % en nombre des radicaux R étant méthyle.

4. - Procédé de préparation d'un polyorganopolysilane tel que défini à l'une quelconque des revendications 1 à 3, caractérisé en ce que :

a) - l'on effectue la réaction au moins partielle d'un polyorganosiloxane présentant par molécule au moins 3 motifs siloxyle dont au moins un motif siloxyle répondant à la formule générale :

$$(CH_2 = CH)R_aSiO_{\frac{3-a}{2}} \qquad (1')$$

dans laquelle R et a ont la signification donnée ci-dessus, dans un solvant organique, avec de l'hydrogène et du monoxyde de carbone en présence d'un système catalytique contenant du rhodium et des sels de triarylphosphines sulfonées ou carboxylées solubles dans les solvants organiques et insolubles dans l'eau, le mélange homogène obtenu étant ensuite mis en contact avec une solution aqueuse d'une base en vue de séparer ledit mélange en une phase organique renfermant l'organopolysiloxane à groupe propanaldéhyde et une phase aqueuse renfermant le catalyseur à base de rhodium.

5. - Procédé de préparation selon la revendication 4, caractérisé en ce que le polyorganosiloxane de départ est choisi parmi ceux de formule :

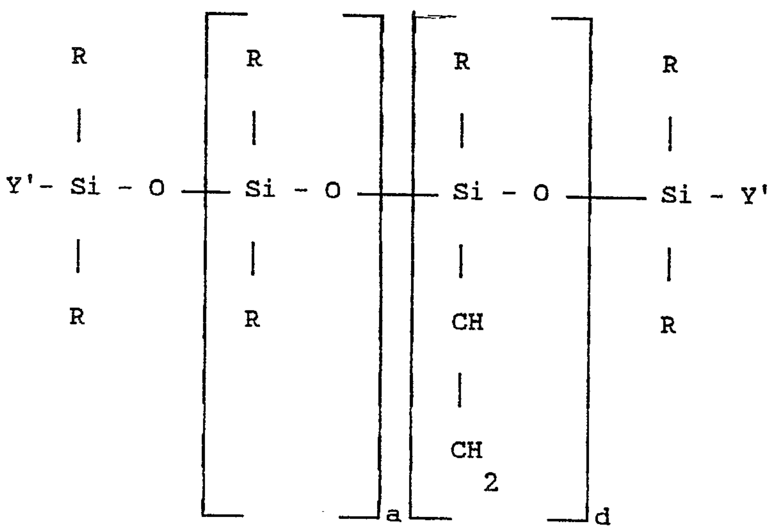

(2')

dans laquelle :
- R et a ont la signification ci-dessus,
- d est égal à b + c, et
- Y' est choisi parmi un radical vinyle et le radical R et, quand d = 0 au moins un des deux Y' est un radical vinyle,
et de formule :

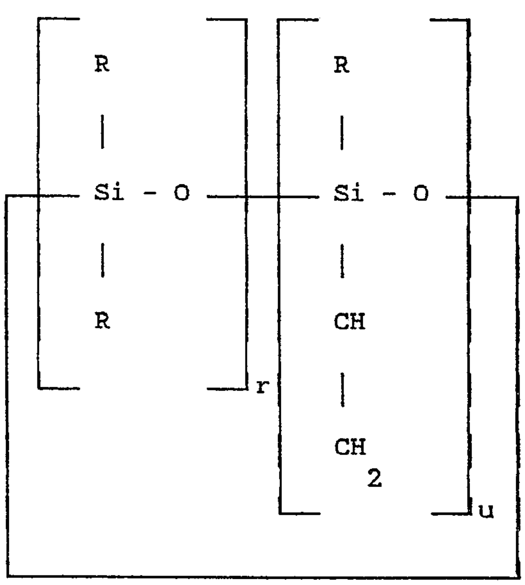

(3')

dans laquelle R a la signification donnée ci-dessus et u est égal à s + t, r + u étant compris entre 3 et 10 inclus.

6. - Procédé selon une quelconque des revendications précédentes, caractérisé en ce que le système catalytique est formé de l'association d'un complexe de rhodium dinucléaire de formule :

$\{Rh(\mu\text{-}SZ)(CO)_2\}_2$

Z étant un radical hydrocarboné monovalent avec un excès molaire d'une triphénylphosphine trisulfphonée de formule :

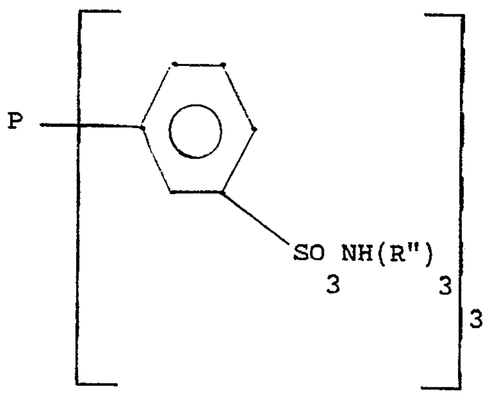

dans laquelle R″ est choisi parmi un radical alkyle ayant de 4 à 12 atomes de carbone, un radical aryle ou un radical cycloalkyle ayant de 6 à 12 atomes de carbone.

7. - Elastomères obtenus avec un polysiloxane selon la présente invention.

Office européen des brevets

# RAPPORT DE RECHERCHE EUROPEENNE

Numero de la demande

EP 89 42 0318

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-3 632 869 (BAYER) * Revendication 1; page 10, lignes 59-66; page 11, lignes 35-37; page 12, en entier; page 13, lignes 27-41 * | 1-4 | C 08 G 77/38<br>C 08 G 77/14 |
| D,Y | EP-A-0 089 690 (UNION CARBIDE) * Revendications 1,7; page 6, lignes 16-19; page 17, lignes 6-23 * | 1-4 | |
| A | EP-A-0 183 280 (UNION CARBIDE) * Revendication 1 * | 1 | |

DOMAINES TECHNIQUES RECHERCHES (Int. Cl.5)

C 08 G

Le présent rapport a été établi pour toutes les revendications

| Lieu de la recherche | Date d'achèvement de la recherche | Examinateur |
|---|---|---|
| LA HAYE | 20-11-1989 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)